# EUROPÄISCHE PATENTSCHRIFT

(11) **EP 0 694 503 B1**
(45) Veröffentlichungstag und Bekanntmachung des Hinweises auf die Patenterteilung: **08.03.2000**
(21) Anmeldenummer: 95111292.9
(22) Anmeldetag: 19.07.1995
(51) Int. Cl.: C02F 1/70, C02F 1/20

(54) **Verfahren zur Entfernung in Wasser gelösten Sauerstoffes, insbesondere in wasserführenden, geschlossenen Systemen**
Process for elimination of oxygen dissolved in water, especially in water leading, closed systems
Procédé pour éliminer l'oxygène dissous dans l'eau en particulier dans les conduites d'eau en circuit fermé

(30) Priorität: 29.07.1994 DE 4427038
(43) Veröffentlichungstag der Anmeldung: 31.01.1996
(73) Patentinhaber: Schilling Chemie GmbH u. Produktion KG, D-71691 Freiberg (DE)
(72) Erfinder: Scharmann, Rolf, Dipl.-Ing., verstorben (DE); Thiem, Hiltrud, Dr., D-71711 Steinheim (DE)
(74) Vertreter: Riedel, Peter, Dipl.-Ing.

(56) Entgegenhaltungen:
- EP-A- 0 019 197
- EP-A- 0 674 021
- BE-A- 661 452
- DE-B- 1 696 316
- FR-A- 1 361 613
- US-A- 4 311 599

## Beschreibung

Die Erfindung betrifft ein Verfahren zur Entfernung in Wasser gelösten Sauerstoffes mit einem Reduktionsmittel und unter Verwendung eines Reaktionsbeschleunigers, insbesondere zur Hemmung der sauerstoffbedingten Korrosionsvorgänge in wasserführenden, geschlossenen Systemen.

Die Anwesenheit von Sauerstoff in wasserführenden Systemen kann zu Korrosionsvorgängen an metallischen Werkstoffen führen. Dadurch verursacht, können in Kalt- und Warmwassersystemen Rohrbrüche, Pumpendefekte, Blockierung des Wasserdurchflusses durch Korrosionsprodukte und andere Schäden auftreten.

Um korrosive Wirkungen, ausgehend vom gelösten Sauerstoff im Wasser, zu vermeiden, sollte der im Wasser gelöste Sauerstoff entfernt werden. Dies kann physikalisch, z.B. durch thermische Entgasung, und/oder chemisch unter Zusatz eines Reduktionsmittels geschehen.

Als Sauerstoffbindemittel werden seit langem Hydrazin und Natriumsulfit, aber auch Ascorbinsäure, Erythorbinsäure, Hydroxylamin, Methylethylketoxime, Hydrochinone und viele andere eingesetzt, wobei jedes Mittel spezifische Vor- und Nachteile aufweist.

Die korrosionsschützenden Eigenschaften von Hydrazin infolge Magnetfilmbildung und als Sauerstoffbinder sind unumstritten. Hydrazin steht jedoch unter dem Verdacht, krebserregend zu wirken. Es ist sowohl hautresorptiv als auch sensibilisierend (TRGS 608). Nachteilig ist ferner, daß die Geschwindigkeit der Sauerstoffreduktion bei Raumtemperatur außergewöhnlich klein ist, so daß die Korrosionsvorgänge bei Anwendung von Hydrazin bei niedrigen Temperaturen nicht effizient verhindert werden können.

Man hat zahlreiche Versuche unternommen, sauerstoffbindende Systeme zu entwickeln, die auch bei niedrigen Temperaturen effizient sind, beispielsweise mittels Zusatz von Methylenblau zu Hydrazin und Schwermetallzyaniden zu Hydrazin. Die CH-PS 458 013 beschreibt ein Verfahren zum Korrosionsschutz von metallischen Gegenständen, die mit einer wässrigen Phase in Berührung stehen, wobei Hydrazin durch Zugabe von Methylenblau aktiviert wird.

Auf diese Verfahren sollte man jedoch aufgrund der Toxizität von Hydrazin verzichten. Verbindungen wie beispielsweise Sulfite, Ascorbate und Erythorbate (Isoascorbate) sind zwar bei Raumtemperatur wirksamer als Hydrazin, weisen jedoch nur mäßige Sauerstoffbindegeschwindigkeit auf.

Entsprechende Versuche der Fachwelt, die Sauerstoffbindegeschwindigkeit zu erhöhen, beispielsweise mittels schwermetallaktivierten Sulfitsystemen, vermochten sich in der Praxis wegen der Toxizität der Schwermetallsalze nicht durchzusetzen.

Aus der DE 16 96 316 B ist bekannt, Hydrazin als Sauerstoffbindemittel einzusetzen und Methylenblau als Indikator für Hydrazin. Das bedeutet, durch die jeweilige Färbung wird erkennbar, ob eine ausreichende Menge von Hydrazin vorhanden ist. Bei farbloser Lösung ist genügend Hydrazin vorhanden. Sofern das Hydrazin aufgebraucht ist und Luftsauerstoff eindringt, so tritt eine Blaufärbung ein, die den Hydrazinmangel visuell anzeigt.

Aufgabe der Erfindung ist es, ein Verfahren anzugeben, das die erwähnten Nachteile vermeidet und die Sauerstoffbindung in wässerigen Medien erheblich beschleunigt, und das im Vergleich zur Verwendung bekannter Reaktionsbeschleuniger eine weitaus geringere Toxizität hat.

Die Aufgabe wird gemäß der Erfindung mit den Merkmalen des Patentanspruches 1 gelöst.

Die Zugabe von Methylenblau zu den in der Fachwelt bekannten Sauerstoffbindemitteln führt überraschenderweise zu einer erheblichen Beschleunigung der Sauerstoffbindegeschwindigkeit in wässrigen Medien, insbesondere auch bei Raumtemperatur.

Im Gegensatz zu den als Reaktionsbeschleuniger bekannten Schwermetallsalzen zeigt Methylenblau eine weitaus geringere Toxizität und höhere Umweltverträglichkeit.

Es wird angenommen, daß die Wirkung des Methylenblau zumindest zum Teil darauf beruht, daß es in der reduzierten Form rasch von dem im Wasser gelösten Sauerstoff in die oxidierte Form überführt wird, die ihrerseits durch Reduktionsmittel wieder reduziert wird.

Diese beiden Reaktionen laufen schneller ab als die direkte Umsetzung zwischen Sauerstoff und Reduktionsmittel.

In Weiterbildung der Erfindung liegt das molare Verhältnis des Reduktionsmittels zu den Thiazinfarbstoffen im Bereich 1:1 bis 500:1. Die Wirksamkeit des erfindungsgemäßen Reduktionsmittel-/Reaktionsbeschleunigersystems ist im Temperaturbereich zwischen 10° bis 280°C, bevorzugt 60° bis 280°C, besonders deutlich.

Nach einem weiteren Merkmal der Erfindung wird das zu behandelnde Wasser mit einer Gesamtmenge des Reduktionsmittel-/Reaktionsbeschleunigersystems von 10 bis 10.000 ppm, bevorzugt 100 bis 5.000 ppm versetzt.

Die Erfindung wird im Folgenden anhand von Ausführungsbeispielen näher erläutert.

Der gelöste Sauerstoff wurde bei Wassertemperaturen von <40°C mittels eines im Handel erhältlichen Sauerstoffmeßgerätes mit selektiver Membranelektrode, bei Temperaturen >40°C kolorimetrisch mittels Sauerstoffmeßampullen (US-A 3 634 038) bestimmt. Die Versuche wurden in einem zur Atmosphäre offenen Reaktionsgefäß durchgeführt.

### Beispiel 1

Die Wirksamkeit des erfindungsgemäßen Reaktionsbeschleunigers bei der Sauerstoffabbindung mittels Reduktionsmittel in wässrigen Medien wurde in enthärtetem Stadtwasser (Gesamthärte <0,1 mol/m³, Karbonathärte 4,3 mol/m³, Leitfähigkeit 69 mS/m) bei Normaldruck untersucht. Als Sauerstoffbindemittel bzw. Reduktionsmittel wurde Natriumsulfit in einer Dosierhöhe von 100 ppm, als Reaktionsbeschleuniger Methylenblau in einer Dosierhöhe von 1 ppm eingesetzt. Die Versuche wurden mit und ohne Reaktionsbeschleuniger durchgeführt.

Die Wassertemperatur betrug 21°C, der pH-Wert 7,5.

**Tabelle 1 -**

| Zeitabhängigkeit der Sauerstoffbindung. | | |
|---|---|---|
| Zeit (min) | Sauerstoff (mg/1) ohne Reaktionsbeschleuniger | Sauerstoff (mg/1) mit Reaktionsbeschleuniger |
| 0 | 8,8 | 8,8 |
| 0,5 | 8,7 | 4,7 |
| 1 | 8,6 | 2,2 |
| 1,5 | 8,6 | 0,8 |
| 2 | 8,6 | 0,1 |
| 2,5 | 8,5 | 0 |
| 240 | 5,7 | |

### Beispiel 2

Es wurden die Versuche mit den Voraussetzungen wie im Beispiel 1 durchgeführt, wobei der pH-Wert des Wassers 9,5 betrug.

**Tabelle 2 -**

| Zeitabhängigkeit der Sauerstoffbindung. | | |
|---|---|---|
| Zeit (min) | Sauerstoff (mg/1) ohne Reaktionsbeschleuniger | Sauerstoff (mg/1) mit Reaktionsbeschleuniger |
| 0 | 8,8 | 8,8 |
| 0,25 | 8,7 | 5,1 |
| 0,5 | 8,5 | 2,1 |
| 1 | 8,2 | 0,2 |
| 1,25 | 7,8 | 0,05 |
| 1,75 | 7,6 | 0 |

### Beispiel 3

Es wurden die Versuche mit den Voraussetzungen wie im Beispiel 1 durchgeführt, wobei die Reaktionsbeschleunigerkonzentrationen variiert und die Meßwerte in kürzeren Zeitabständen registriert wurden.

**Tabelle 3 -**

| Zeitabhängigkeit der Sauerstoffbindung von der Dosierung. | | | |
|---|---|---|---|
| Zeit (sec) | Sauerstoff (mg/1) 2 ppm Reaktionsbeschleuniger | Sauerstoff (mg/1) 1 ppm Reaktionsbeschleuniger | Sauerstoff (mg/1) 0.5 ppm Reaktionsbeschleuniger |
| 0 | 8,9 | 8,9 | 8,9 |
| 20 | 3,3 | 5,3 | 6,4 |
| 30 | 1,8 | 4,7 | 5,3 |
| 40 | 0,8 | 3,6 | 4,1 |
| 60 | 0,3 | 2,2 | 3,1 |
| 90 | 0,2 | 0,8 | 1,5 |
| 120 | 0 | 0,2 | 0,3 |
| 150 | | 0 | 0,2 |
| 180 | | | 0 |

### Beispiel 4

Unter Anwendung der zum Beispiel 1 beschriebenen Bedingungen im übrigen wurde als Reduktionsmittel Natriumascorbat in einer Dosierhöhe von 500 ppm verwendet. Die Wassertemperatur betrug 60°C.

**Tabelle 4 -**

| Zeitabhängigkeit der Sauerstoffbindung. | | |
|---|---|---|
| Zeit (min) | Sauerstoff (mg/1) ohne Reaktionsbeschleuniger | Sauerstoff (mg/1) mit Reaktionsbeschleuniger |
| 0 | 4,5 | 4,5 |
| 1 | 3 | 2,5 |
| 2 | 3 | 2 |
| 3 | 2 | 1 |
| 4 | 1,5 | >0,1 <1 |
| 5 | 1 | >0,1 <1 |
| 20 | >0,1 <1 | 0,1 |
| 25 | >0,1 <1 | 0,05 |
| 30 | >0,1 <1 | 0 |
| 120 | >0,1 <1 | |

## Patentansprüche

1. Verfahren zur Entfernung von in Wasser gelöstem Sauerstoff mit einem Reduktionsmittel unter Verwendung eines Reaktionsbeschleunigers, insbesondere zur Hemmung der sauerstoffbedingten Korrosionsvorgänge in wasserführenden, geschlossenen Systemen, wobei als Reduktionsmittel Ascorbinsäure, Ascorbat, Brythorbinsäure, Brythorbat (Isoascorbat), Sulfit, Hydrogensulfit für sich allein oder in Kombination verwendet werden und als Reaktionsbeschleuniger Methylenblau verwendet wird, wobei der pH-Wert in dem zu behandelnden Wasser mindestens 6,5 beträgt.

2. Verfahren nach Anspruch 1,
dadurch gekennzeichnet, daß das molare Verhältnis der Thiazinfarbstoffe zum Reduktionsmittel im Bereich von 1:1 bis 1:500 liegt.

3. Verfahren nach einem der Ansprüche 1 oder 2,
dadurch gekennzeichnet, daß die Temperatur des neu zu behandelnden Wassers im Bereich zwischen 10° bis 280°C liegt und der Druck zwischen 0,1 und 68 bar beträgt.

4. Verfahren nach Anspruch 3,
dadurch gekennzeichnet, daß die Temperatur des zu behandelnden Wassers im Bereich zwischen 60° und 280°C liegt und der Druck zwischen 22 und 68 bar beträgt.

5. Verfahren nach einem der Ansprüche 1 bis 4,
dadurch gekennzeichnet, daß das Reduktionsmittel/Reaktionsbeschleuniger-System dem zu behandelnden Wasser im Konzentrationsbereich von 10 bis 10.000 ppm zugegeben wird.

6. Verfahren nach Anspruch 5,
dadurch gekennzeichnet, daß der Konzentrationsbereich 100 bis 5.000 ppm beträgt.

## Claims

1. Method for the removal of oxygen dissolved in water by means of a reducing agent and using a reaction accelerator, in particular to inhibit corrosion processes caused by oxygen in closed water-circulating systems, in which ascorbic acid, ascorbates, erythorbic acid, erythorbates (isoascorbates), sulphites, or hydrogen sulphites is/are used singly or in combination as the reducing agent and methylene blue is used as the reaction accelerator, and in which the pH of the water to be treated is at least 6.5.

2. Method according to Claim 1,
**characterised in that**
the molar ratio of the thiazine dye to the reducing agent is in the range 1:1 to 1:500.

3. Method according to either of Claims 1 or 2,
**characterised in that**
the temperature of the water to be freshly treated is in the range 10° to 280°C and the pressure is between 0.1 and 68 bar.

4. Method according to Claim 3,
**characterised in that**
the temperature of the water to be treated is in the range between 60° and 280°C and its pressure is between 22 and 68 bar.

5. Method according to any of Claims 1 to 4,
**characterised in that**
the reducing agent / reaction accelerator system is added to the water to be treated in a concentration range of 10 to 10,000 ppm.

6. Method according to Claim 5
**characterised in that**
the concentration range is 100 to 5,000 ppm.

## Revendications

1. Procédé d'élimination d'oxygène dissous dans de l'eau avec un agent réducteur en utilisant un accélérateur de réaction, en particulier pour inhiber les processus de corrosion dus à l'oxygène dans des systèmes de conduites d'eau en circuit fermé, dans lequel on utilise, comme agent réducteur, de l'acide ascorbique, de l'ascorbate, de l'acide érythorbique, de l'érythorbate (iso-ascorbate), du sulfite, de l'hydrogénosulfite, individuellement ou combinés, et du bleu de méthylène comme accélérateur de réaction, la valeur de pH dans l'eau à traiter étant d'au moins 6,5.

2. Procédé selon la revendication 1, caractérisé en ce que le rapport molaire des colorants thiaziniques à l'agent réducteur est compris dans la plage de 1:1 à 1:500.

3. Procédé selon l'une des revendications 1 ou 2, caractérisé en ce que la température de l'eau à traiter de nouveau est comprise dans la plage de 10° à 280°C, et la pression est comprise entre 0,1 et 68 bars.

4. Procédé selon la revendication 3, caractérisé en ce que la température de l'eau à traiter est comprise dans la plage de 60° à 280°C, et la pression est comprise entre 22 et 68 bars.

5. Procédé selon l'une des revendications 1 à 4, caractérisé en ce que le système agent réducteur/accélérateur de réaction est ajouté à l'eau à traiter dans la plage de concentration de 10 à 10 000 ppm.

6. Procédé selon la revendication 5, caractérisé en ce que la plage de concentration est de 100 à 5 000 ppm.
